# EUROPÄISCHE PATENTSCHRIFT

(11) **EP 0 765 928 B1**
(45) Veröffentlichungstag und Bekanntmachung des Hinweises auf die Patenterteilung: **20.11.2002**
(21) Anmeldenummer: 96810540.3
(22) Anmeldetag: 14.08.1996
(51) Int. Cl.: C10J 3/06

(54) **Gasgenerator zur kontinuierlichen Erzeugung eines brennbaren Gases**
Gasgenerator for continuous production of a combustible gas
Générateur de gaz pour la production continue d'un gaz combustible

(30) Priorität: 27.09.1995 CH 272495
(43) Veröffentlichungstag der Anmeldung: 02.04.1997
(73) Patentinhaber: Jakob, Huber, Ing., 1806 St.-Légier (CH)
(72) Erfinder: Jakob, Huber, Ing., 1806 St.-Légier (CH)
(74) Vertreter: Winkler, Kurt, Dr.

(56) Entgegenhaltungen:
- EP-A- 0 568 997
- GB-A- 227 880
- US-A- 4 318 713
- US-A- 4 591 362
- US-A- 4 881 947

## Beschreibung

Die Erfindung betrifft einen Gasgenerator zur kontinuierlichen Erzeugung eines brennbaren Gases durch unvollständige Verbrennung von Feststoffen unter Zuführung von Luft, ... von Luft, im wesentlichen bestehend aus einem Drehrohr, welches an seinen beiden verjüngten Enden mit Hilfe von nichtdrehenden Abschlusselementen gegenüber der umgebenden Atmosphäre verschlossen ist, von denen das eine für die Zuführung des Gutes in das Drehrohr und das andere für die Abführung der Schlacke aus dem Drehrohr eingerichtet ist.

Zur Gewinnung von Gas aus Kohle wird dieselbe in einen gut abgeschlossenen Behälter eingefüllt, welcher von aussen erwärmt wird. Die flüchtigen Anteile entweichen aus der Kohle und werden anschliessend zu Stadtgas aufbereitet. Zurück bleibt der Koks, welcher einen höheren Heizwert als die Kohle hat und in der Industrie und für Hausheizungen verwendet wird. Durch die Gasgewinnung erhält man ein Produkt, welches in Leitungen transportfähig, sofort entzündbar und lagerfähig ist sowie einen hohen Heizwert aufweist.

Der bei verschiedenen Gelegenheiten stets in nicht unbedeutenden Mengen anfallende Kohlegriess ist auf die vorbeschriebene Weise nicht verwertbar.

Es sind auch Holzvergaser für den Betrieb von Explosionsmotoren bekannt. Diese benötigen jedoch ausgesuchte Holzqualitäten, um eine dauernde Vergasung zu unterhalten. Das zeitweise Nachfüllen frischen Materials und das Abwarten bis zum Beginn seiner Vergasung bedingt jedoch unerwünschte Betriebsunterbrüche. Ausserdem ist der Leistungsabfall der Motoren, da sie sich selbst das Brenngas ansaugen müssen, beträchtlich gegenüber einem Betrieb mit Kohlewasserstoffen.

Aus der US-PS 4,591,362 ist ein Brennofen zur Erzeugung eines brennbaren Gases bekannt, dessen Längsteil in nichtdrehenden Abschlusselementen gelagert ist, und für welchen Zonen unterschiedlichen Erwärmungsgrades des zu vergasenden Gutes auf dem Wege durch den Ofen eingezeichnet sind. Die Begrenzungen dieser Zonen sind willkürlich getroffen, sie sind durch keinerlei mechanische Mittel festgelegt oder durch andere Massnahmen realisierbar. Sie dienen lediglich als Erklärungshilfen für die Temperaturverhältnisse im Ofen.

In der US-PS 4,318,713 sind für einen Brennofen zur Gaserzeugung die gleichen Zonen wie vorher beschrieben eingezeichnet. So gilt auch für diesen Ofen alles oben Gesagte. Ein baulicher Unterschied besteht jedoch darin, dass die Enden des Drehteils verjüngt sind, die in den Abschlusselementen gelagert sind.

Der in der GB-PS 227,880 gezeigte Brennofen für verschiedene Zwecke, auch zur Gaserzeugung, weist einen Innenmantel des Drehrohres auf. Die Verbrennungsluft durchströmt den Raum zwischen Innen- und Aussenmantel, wobei sie sich erwärmt, und wird anschliessend in einen Brennraum geführt, aus welchem die Abgase zu dem zu behandelnden Gut geleitet werden.

Bei jeder dieser bekannten Ausführungen eines Generators wird das erzeugte Gas am kalten Ende des Drehteils durch das selbe Abschlusselement abgeleitet, durch welches das zu vergasende Frischgut eingebracht wird. Dadurch gelangen feine Staubpartikel und mögliche Ausgasungsprodukte des Frischgutes in das erzeugte Brenngas und verunreinigen es, was für manchen nachherigen Verwendungszweck eine Reinigung erfordert.

Der Erfindung liegt die Aufgabe zugrunde, einen Gasgenerator der eingangs genannten Art zu schaffen, welcher in der Lage ist, aus praktisch allen brennbaren Feststoffen ein brennbares möglichst sauberes Gas zu erzeugen, welcher einen Dauerbetrieb ohne Unterbrüche oder auch nur Schwankungen erlaubt und dessen Leistung auch an wechselnden Bedarf in einfacher Weise angepasst werden kann.

Die erfindungsgemässe Lösung dieser Aufgabe ist aus den kennzeichnenden Merkmalen des Anspruchs 1 ersichtlich.

Durch einen derart gestalteten Gasgenerator ist es möglich, brennbare Feststoffe wie Steinkohle, Braunkohle, Kohlengries, Gummi, Papier, Holz, auch andere trockene Produkte vegetabiler Herkunft und in Verbindung mit diesen Materialien selbst kleinere Mengen Altöl zu vergasen. Die Beschickung erfolgt dauernd oder kurzperiodisch in kleinen Chargen, welche keinen Einfluss auf eine gleichmässige, kontinuierliche Gaserzeugung haben. Die Gasentnahme kann daher, ohne auf irgendeinen Rhythmus in der Beschickung oder Gaserzeugung Rücksicht nehmen zu müssen, bedarfsabhängig gesteuert werden. Bei vorübergehendem Nullverbrauch wird nur jene minimale Luftmenge zugeführt, welche für die Aufrechterhaltung des Brandes im Drehrohr unerlässlich ist. Dadurch kann die Gaserzeugung jederzeit in vollem Umfange wieder aufgenommen werden, ohne einen Reservebehälter als Speicher zu benötigen, was jedoch die Verwendung eines solchen nicht ausschliesst. Mit der Ableitung des brennbaren Gases direkt vom Entstehungsort wird eine grosse Reinheit desselben erzielt, ohne Beimengungen von unerwünschten Komponenten wie staubförmigem Frischmaterial, Ausgasungen und ähnlichem.

Das erzeugte brennbare Gas kann für die verschiedensten Verwendungszwecke, bei genügender Reinigung sogar für den Betrieb von Verbrennungsmotoren bereitgestellt werden.

Die bei der Gaserzeugung anfallende, erhebliche Abwärme lässt sich auf vielerlei Art verwerten. Genannt seien beispielsweise die Beheizung von Gebäuden, Treibhäusern, Schwimmbecken, Verwertung in der Industrie, in Textilbetrieben, Waschanstalten usw. Das zu vergasende Gut wird optimal ausgenützt, und es lässt sich für den gesamten Vergasungsprozess ein maximaler Wirkungsgrad erzielen.

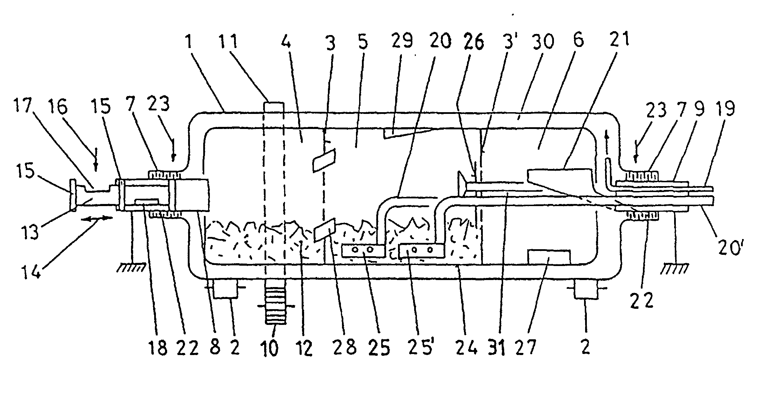

In der einzigen Figur der Zeichnung ist ein Ausführungsbeispiel des erfindungsgemässen Gasgenerators schematisch dargestellt.

Das Drehrohr 1 ist auf den Rollen 2 gelagert. Es ist durch die beiden Stauringe 3,3' in drei Zonen 4,5 und 6 unterteilt. Seine verjüngten Enden 7 sind durch die nichtdrehenden Abschlusselemente 8, 9 dichtend verschlossen, die von den Enden 7 umfasst werden, was eine kompakte Bauweise ermöglicht und die abdichtung vereinfacht. Die Drehbewegung wird durch den aus dem Ritzel 10 und dem Zahnkranz 11 bestehenden Antrieb erzeugt.

Das Abschlusselement 8 dient der Zufuhr des zu vergasenden Gutes 12. Zu diesem Zwecke ist es zylinderförmig ausgebildet und an seinen beiden Enden offen. In ihm bewegt sich der ebenfalls hohle Einschubkolben 13 hin und her, wie durch den Doppelpfeil 14 veranschaulicht ist. Er ist durch drei Kolbenringe 15 geführt, von denen sich in jeder Lage des Kolbens 13 mindestens zwei innerhalb des Abschlusselements 8 befinden und so eine verlässliche Abdichtung garantieren.

Das in zweckmässig grosse Stücke zerkleinerte Gut wird in Richtung des Pfeiles 16 durch die Chargieröffnung 17 in den Kolben 13 eingefüllt. Sobald dieser so weit gegen das Innere des Drehrohres 1 verschoben ist, dass sich die Entleeröffnung 18 ausserhalb des Abschlusselements 8 befindet, fällt das Gut 12 von selbst heraus und gelangt solcherart in die Zone 4 des Drehrohres.

Bei kleinstückigem Gut kann es vorteilhaft sein, beide Öffnungen 17 und 18 auf der selben Seite des Kolbens 13 anzuordnen, so dass sie bei dessen Axialbewegungen ständig nach oben gerichtet sind. Für die Entleerung muss dann der Kolben eine Drehung um 180° ausführen, was konstruktiv leicht zu lösen ist.

Das Abschlusselement 9 auf der anderen Seite des Drehrohres dient der Halterung des Luftrohres 19, der hohlen Tragarme 20 und 20', des Sammlers 21 sowie des Ableitungsrohres 31. Auf die Funktion dieser Bauteile wird weiter unten noch näher eingegangen.

Für die Abdichtung zwischen den verjüngten Enden 7 des Drehrohres 1 und den Abschlusselementen 8 bzw. 9 kann jede zweckentsprechende Dichtung bekannter Art verwendet werden. Vorteilhaft ist es, dafür Lamellendichtungen 22 vorzusehen, und je eine Zwischenstufe derselben mit unter Druck stehender Sperrluft zu beaufschlagen, wie es durch die Pfeile 23 versinnbildlicht ist. Ein Teil des Luftstromes strömt jeweils nach aussen, der andere Teil nach innen und verhindert solcherart einen Austritt von Gas aus dem Drehrohr.

Das zu vergasende Gut wird, wie schon oben beschrieben, mit Hilfe des Einschubkolbens 13 durch das Abschlusselement 8 in das Drehrohr 1 eingebracht. Es gelangt zuerst in die Zone 4, welche als Trocknungskammer dient. Die Vorwärmung des Gutes in dieser Zone ermöglicht eine raschere Vergasung in der anschliessenden Zone 5. Zufolge der Temperaturerhöhung entsteht, durch den Abschluss mittels des dichtenden Einschubkolbens erst ermöglicht, im Drehrohr ein Überdruck, wodurch das brennbare Gas durch das Ableitungsrohr 31 nach aussen geführt werden kann, ohne die sonst notwendige Absaugung erforderlich zu machen.

Naturgemäss herrscht in der Zone 5 die höchste Temperatur. Um die Abstrahlungsverluste klein zu halten, kann der zusätzliche Innenmantel 24 vorgesehen werden, welcher, wie später dargelegt wird, noch eine weitere Aufgabe erfüllen kann. Ferner ist es vorteilhaft, den Hitzeschild 26 einzubauen, welcher an den Tragarmen 20 und 20' befestigt ist und verhindert, dass einerseits zuviel Wärme gegen das Abschlusselement 9 hin abstrahlt, andererseits noch nicht oder erst ungenügend vergastes Gut in die Zone 6 gelangt. Ein Übergang von Wärme in die Zone 4 ist eher erwünscht, um die Trocknung des Gutes und eine Vorwärmung desselben zu erzielen.

In der Zone 6 wird die Asche und, sofern das ausgegaste Gut nicht bereits zu Asche geworden ist, die übrigbleibende Schlacke im Sammler 21 gesammelt und nach aussen gefördert.

Die selbsttätige Förderung des Gutes innerhalb des Drehrohres 1, in der Zeichnung von links nach rechts, erfolgt in einfacher Weise. Es genügt bereits eine leichte Neigung der Drehachse des Drehrohres zur Horizontalen, wie es von Drehöfen bekannt ist, doch ergeben sich hierbei gewisse Probleme bei der Rollenlagerung. Andere Hilfsmittel sind der Zeichnung zu entnehmen.

Der Stauring 3 zwischen den Zonen 4 und 5 ist mit den Transportschaufeln 28 versehen. Sie können hinsichtlich ihres Anstellwinkels auch verstellbar ausgeführt sein. Eine solche Verstellung lässt sich von aussen und sogar während des Betriebes vornehmen, wenn eine raschere Förderung erwünscht ist. Normalerweise wird jedoch für eine bestimmte Art des Gutes die einmal gewählte Einstellung der Schaufeln unverändert belassen. Selbstverständlich können auch am Stauring 3' gleiche oder ähnliche Transportschaufeln angebracht werden.

In der Zone 5 sind über den Umfang verteilte Transportelemente 29 vorgesehen, die je nach Konstruktion des Generators am Mantel des Drehrohres 1 oder am Innenmantel 24 angebracht sind. Sie dienen einerseits dazu, das in der Vergasungsphase befindliche Gut besser zu durchmischen, andererseits zur Förderung desselben in axialer Richtung, indem sie jeweils einen Teil davon aus der übrigen Masse herausheben und nach weiterer Drehung des Rohres 1 gegen das Abschlusselement 9 hin wieder freigeben. Ähnliche Transportelemente 27 können auch in der Zone 6 angeordnet werden, um das Sammeln von Asche und Schlacke im Sammler 21 zu erleichtern oder die letztere sogar zu zerkleinern. Der Transport der Feststoffe kann auch derart gesteuert werden, dass Aktivkohle gewonnen wird, wenn geeignete Feststoffe zum Einsatz kommen.

Wenn ein Innenmantel 24 vorhanden ist, welcher mit dem Mantel des Drehrohres 1 den Innenraum 30 bildet, kann vor der Inbetriebsetzung des Gasgenerators Abwärme aus einer Wärmequelle, z.B. von Dieselabgasen, in den Innenraum eingeleitet werden. Dies erfolgt am einfachsten durch das Luftrohr 19, es können aber auch Öffnungen im Drehrohrmantel dafür vorgesehen sein. Durch weitere Öffnungen, die derart angeordnet sind, dass im Innenraum 30 eine Zirkulation entsteht, werden die wärmeabgebenden Gase nach aussen abgeführt. Damit wird der ganze Generator und das darin befindliche Vergasungsgut vorgewärmt.

Die wärmeabgebenden Abgase können aber auch in das Innere des Generators geleitet und durch das Ableitungsrohr 31 abgeführt werden, was eine noch bessere, weil direkte Wärmeübertragung an das Vergasungsgut ergibt. In beiden Fällen kann der Generator in kürzester Zeit aktiviert und brennbares Gas für die vorgesehene Verwendung bereitgestellt werden.

Zur Inbetriebsetzung des Gasgenerators werden zuerst die beiden Zonen 4 und 5 durch das Abschlusselement 8 mit dem zu vergasenden Gut bis zur ungefähren Höhe des Staurandes 3 gefüllt.Es eignen sich dazu praktisch alle brennbaren Feststoffe, aber auch ein gewisses Quantum Altöl kann gleichzeitig verwertet werden. Dieses wird den bereits in die richtige Grösse gebrachten Feststoffen schon vor der Beschickung oder innerhalb des Drehrohres 1 in einer solchen Dosis beigemischt, dass es das stückige Gut mit einem nicht zu dicken Film überzieht. Diese Vorsichtsmassnahme ist nötig, damit durch die Verkokung des Öls das Gut nicht zusammenbackt und so eine feste Masse bildet.

Nun wird das Gut in der Zone 5 lokal erwärmt, was beispielsweise elektrisch oder mit einer Gasfackel geschehen kann, welche durch eines der (nicht gezeichneten) Schaulöcher hindurchgesteckt wird.

Um die Verbrennung anzufachen, wird durch den hohlen Tragarm 20 und die stillstehende, beispielsweise als Rost ausgebildete Vorrichtung 25, ähnlich wie bei einem Schmiedefeuer, von unten Druckluft in das zu vergasende, vorgewärmte Gut eingeblasen und so der thermische Prozess mit der notwendigen Verbrennungsluft versorgt.

Die entstehenden Gase, die anfänglich noch nicht gesättigt und nur schlecht brennbar sind, werden durch das Ableitungsrohr 31 abgeführt und abgefackelt. Sobald das Gas genügend brennbar ist, wird es mit Hilfe einer einfachen Umschalteinrichtung im Ableitungsrohr der Verwertung zugeführt, was üblicherweise mit der unter Überdruck eingeblasenen Luft erfolgt, nötigenfalls kann es jedoch auch abgesaugt werden. Damit ist die Anfahrphase beendet.

Der weitere Vergasungsprozess läuft durch die Eigenerwärmung weiter. Dabei muss Gas entnommen werden. Durch die entsprechende Steuerung der zugeführten Luftmenge und Anpassung des Druckes im Drehrohr wird eine unvollständige Verbrennung unterhalten. Durch die Drehbewegung des Drehrohres wird die Durchmischung der glühenden Feststoffe unterstützt und auch neue Feststoffe werden der glühenden Zone 5 zugeführt.

Kohlegriess, welcher dem zu vergasenden Gut beigemischt ist, kann ebenfalls vergast werden, wobei die Selbstentzündung, wie Versuche gezeigt haben, je nach Kohlenart schon bei ca. 200° C und einem entsprechenden Überdruck einsetzen kann. Damit muss Kohlegriess nicht mehr zu Bricketts verarbeitet werden.

Feststoffe, die Teer abscheiden, sollen möglichst heiss vergast werden, damit die Verunreinigungen mitverbrennen und eine nachträgliche Reinigung verringert oder, je nach verlangtem Reinheitsgrad, sogar gänzlich vermieden werden kann.

Ist das erzeugte Gas für einen Verbrennungsmotor bestimmt, so besteht die Möglichkeit, es durch die heisse Glut des Vergasungsgutes hindurch abzusaugen.Bei den hohen Temperaturen verbrennen Teerstoffe und eventuell vorhandene giftige Produkte praktisch vollständig, was für einen Verbrennungsmotor unerlässlich ist, insbesondere wenn das Gas vom Generator direkt zum Motor geleitet werden soll. Eine Kühlung des Gases ist in diesem Falle unbedingt notwendig, was andererseits mit Vorteil zur Abwärmegewinnung ausgenützt werden kann. Selbstverständlich ist auch eine nachträgliche Reinigung des Gases möglich, was aber einen zusätzlichen Verfahrensschritt bedeutet.

Für den obengenannten Zweck ist eine weitere, als Rost ausgebildete Vorrichtung 25' vorgesehen, die am Tragarm 20' befestigt ist und, in Förderrichtung des Gutes im Generator gesehen, nach der Vorrichtung 25 eingebaut ist. Bei grossen Generatoren können auch mehrere Vorrichtungen 25 und 25'vorgesehen sein, die neben- oder hintereinander angeordnet werden. Bei allen Ausführungen ist es zweckmässig, die Vorrichtungen 25 und 25' nicht parallel zur Drehachse, sondern unter einem Neigungswinkel - aus der Zeichnungsebene heraus - anzuordnen, was die Förderung des zu vergasenden Gutes innerhalb des Generators unterstützt.

Durch die Vorrichtung 25 wird die für die Vergasung des Gutes notwendige Luft eingeblasen, durch die Vorrichtung 25' wird, wie oben beschrieben, brennbares Gas durch die glühenden Feststoffe abgesaugt, wodurch es weniger oder gar keine Teerstoffe enthält.

Bei feinstückigem Gut oder nach längerer Betriebsdauer könnte es vorkommen, dass die in der Vorrichtung 25' vorhandenen Öffnungen sich teilweise oder auch ganz verlegen. Dem kann abgeholfen werden, indem gelegentlich ein Luftstoss durch den Tragarm 20' eingeleitet wird. In manchen Fällen ist es sogar zweckmässig, die Luftzuführung und die Gasentnahme von Zeit zu Zeit umzukehren, indem während des Vergasungsvorganges die benötigte Luft durch den Tragarm 20' zugeführt und das erzeugte Gas durch den Tragarm 20 entnommen wird.

Mechanisch ist das mit einem Umschaltelement einfach zu lösen, das ausserhalb des Generators in die Anschlussleitungen der Tragarme 20 und 20' eingeschaltet ist und die wahlweise Zuund Ableitung durch jeden Tragarm ermöglicht.

Es besteht aber auch die Möglichkeit, sowohl durch den einen Tragarm als auch durch das Ableitungsrohr 31 Gas aus dem Generator zu entnehmen. Die eine Gasentnahme liefert z.B. Gas für Heizzwecke, welches vorher durch die vorzuwärmenden Feststoffe fliesst. Die andere liefert Gas für andere Zwecke, wobei es eventuell noch abgekühlt werden muss. Eine notwendige Regelung kann dabei durch das Aufrechterhalten unterschiedlicher Drücke an den beiden Entnahmestellen erfolgen.

Bei allen genannten Betriebsarten ist eine teilweise Rezirkulation möglich, indem ein Teil des erzeugten Gases erneut in das Drehrohr 1 eingeleitet wird, z.B. durch das Luftrohr 19. Dadurch kann ein im Gas eventuell noch vorhandener Rest von Sauerstoff zur Erzeugung weiteren Kohlenmonoxids ausgenützt werden, womit eine höhere Konzentration desselben erreicht wird.

Das wäre besonders im Ruhebetrieb bei minimaler Gaserzeugung vorteilhaft, so dass ein Reservebehälter mit hochwertigem Gas gefüllt werden kann. Es ist verständlich, dass proportional zur abgeleiteten Gasmenge eine bestimmte Luftmenge in das Drehrohr eingebracht werden muss.

Ebenso ist die Zufuhr der zu vergasenden Feststoffe anzupassen, was elektronisch gesteuert werden kann und keine Schwierigkeiten bietet. Die gesamte Steuerung des erfindungsgemässen Gasgenerators ist somit, insbesondere bei Normalbetrieb, sehr unkompliziert und über die Luftzufuhr bzw. über die Gasentnahme ohne weiteres möglich.

Sind zu wenig Feststoffe in der Vergasungskammer 5 vorhanden, so wäre das entstehende Gas nicht gesättigt. Um dies zu verhindern und eine genügende Gasqualität sicherzustellen, werden am Austritt des Tragarmes 20' und des Ableitungsrohres 31 Ventile angebracht. Bei zu geringem CO-Gehalt des Gases, welchen eine Messeinrichtung ermittelt, wird in Abhängigkeit vom Messwert der Durchflussquerschnitt der Ventile verringert.

Der Gasgenerator ist genügend elastisch, um auch einen stärkeren Anstieg des Gasbedarfs aufzufangen, wenn dieser nur kurzzeitig ist. Wenn der gesteigerte Bedarf jedoch länger andauert, sind weitere Regelschritte erforderlich. Es bieten sich dafür mehrere Möglichkeiten an, die einzeln oder in Kombination miteinander zur Anwendung kommen können.

Eine Steigerung der zuzuführenden Feststoffmenge ist für diesen Fall selbstverständlich Voraussetzung und kann in der weiter oben beschriebenen Art durch das Abschlusselement 8 mechanisch einfach durchgeführt werden.

Auch eine damit verbundene stärkere Zerkleinerung des Gutes, ferner ein Wechsel zu leichter vergasbaren Stoffen oder deren Beimengung zu den bisher verwendeten wäre denkbar.

Eine rasche Förderung der grösseren Feststoffmenge durch das Drehrohr 1 kann durch eine Erhöhung der Drehzahl des Drehrohres, die sonst nur wenige Umdrehungen/Stunde beträgt, sowie durch ein Verstellen des Anstellwinkels der Transportschaufeln 28 erreicht werden. Ferner wäre eine veränderbare Neigung der Drehachse des Drehrohres als mögliche Variante nicht auszuschliessen.

Die zur Vergasung einer grösseren Feststoffmenge benötigte gesteigerte Luftmenge kann bald nicht mehr durch die Vorrichtung 25 allein zugeführt werden. Abhilfe bringt eine zusätzliche Luftzuführung durch die Vorrichtung 25' oder durch das Luftrohr 19. Eine weitere mögliche Betriebsvariante besteht darin, durch das Luftrohr 19 und die Vorrichtung 25 Verbrennungsluft in das Drehrohr 1 zu leiten, und durch die Vorrichtung 25' und das Ableitungsrohr 31 Gas zu entnehmen. Eine entsprechende Mengensteuerung ist von Vorteil, aber nicht bei allen Betriebsarten notwendig.

Zur Steigerung der Gaserzeugung ist es vorteilhaft, die Verbrennungsluft vorzuwärmen. Das kann bereits ausserhalb des Generators erfolgen, indem sie z.B. durch einen Wärmetauscher geleitet wird, in welchem das erzeugte Gas, zweckmässigerweise nach einer Reinigung desselben, einen Teil seiner Wärme abgibt.

Eine andere Möglichkeit zur Erwärmung der Luft besteht darin, sie den Zwischenraum 30 zwischen dem Innenmantel 24 und dem Mantel des Drehrohres 1 durchströmen zu lassen, bevor sie auf das zu vergasende Gut trifft. Das Drehrohr wird dadurch vor Wärmeverlusten geschützt, was gerade bei einer forcierten Gaserzeugung wertvoll ist.

Bei Verwendung des erzeugten Gases in einem Dieselmotor, dessen Abgase bekanntlich einen gewissen Luftüberschuss enthalten, kann ein Teil der Abgase in den Gasgenerator eingeleitet werden.

Es ergeben sich dadurch mehrere Vorteile: der Gasgenerator benötigt weniger Verbrennungsluft somit wird Förderenergie für dieselbe eingespart; die vom Diesel angesaugte Luft wird durch die teilweise Weiterverwertung besser ausgenützt; das Drehrohr kann durch die Abgase, wenn gewünscht, auf einen höheren Innendruck gebracht werden und wird ausserdem aufgeheizt, was einer Verringerung des für die Verbrennung benötigten Wärmebedarfes entspricht und somit eine Steigerung des Wirkungsgrades des Gasgenerators ergibt. Da bekanntlich in den Abgasen des Verbrennungsmotors noch hohe Konzentrationen von Schadstoffen und nicht vollständig verbrannten Gasen und Partikelchen vorhanden sind, besteht die Möglichkeit, in einen zweiten kleineren Gasgenerator sämtliche Abgase des Verbrennungsmotors nochmals einzuleiten und damit vollständig abzubauen und zu vernichten. Die Gase dieses kleineren Generators werden anschliessend separat verwertet.

Ist ein Innenmantel 24 vorhanden, so können auch die heissen Abgase des Dieselmotors oder die rezirkulierten Gase durch den Zwischenraum 30 geleitet werden, um das zu vergasende Gut in der Trocknungszone 4 aufzuwärmen bzw. um die Vergasungszone 5 vor Wärmeverlusten nach aussen besser zu schützen.

Durch ein Abdichten des Innenmantels 24 an einem oder an beiden Abschlusselementen 8 und 9, was z.B. durch weitere Lamellendichtungen erfolgen kann, lässt sich bei unterschiedlichem Druckniveau gegenüber dem Drehrohr-Innenraum eine geregelte Zirkulation im Zwischenraum 30 erzwingen.

Vorteile bringt auch eine Erwärmung des Drehrohres von aussen, insbesondere im Bereich der Vergasungszone 5. Dies kann durch die Ausnützung irgendwelcher heisser Gase oder durch eine Verbrennung von verunreinigten Gasen, die auch anfallen, mittels einem Gasbrenner erfolgen.

Der erfindungsgemässe Gasgenerator kann praktisch auf jedem Druckniveau betrieben werden, wodurch ein zusätzlicher Kompressor für die Weiterleitung des erzeugten Gases oder zur Vorbereitung für den Verbraucher überflüssig wird. Massgebend für das Druckniveau ist der jeweilige Verwendungszweck. Im allgemeinen ist es unerwünscht, wenn der Verbraucher selbst das Gas ansaugen muss. Man wird daher üblicherweise den Betriebsdruck auf einem höheren als dem Verbraucherdruck halten, was durch die zugeführte Verbrennungsluft leicht regelbar ist. Auch werden die maschinellen Einrichtungen mit der Zufuhr sauberer Druckluft weit einfacher. Der Innendruck des Drehrohres 1 bietet sich somit auch als günstiger Parameter für die Leistungsregelung des Generators an, was insbesondere bei schwankendem Gasbedarf wichtig ist.

Durch die Möglichkeit, den Generator bei höheren Drücken und Temperaturen zu verwenden, können auch Zusätze eingeschleust werden, welche vorhandene Giftstoffe neutralisieren.

Bekann ist das Einbringen von Kalk, um Schwefel zu binden. Auch Katalysatoren sowie Wasser bzw. Dampf können eingeführt werden zwecks Auslösung chemischer Reaktionen, um gezielt eine neue Gaszusammensetzung zu erreichen, Giftstoffe zu neutralisieren oder die Verbrennungstemperatur zu beeinflussen. Katalysatoren können dem zu vergasenden Gut bereits vor der Beschickung des Generators, aber auch während des Vergasungsprozesses beigemischt werden.

Für derartige spezielle Betriebsarten kann es vorteilhaft sein, das Drehrohr in mehr als drei Zonen zu unterteilen. Als Beispiel sei eine Unterteilung in vier Zonen kurz beschrieben.

Die erste Zone dient der Trocknung der Feststoffe durch Erwärmung unter gleichzeitiger Vergasung der leicht flüchtigen Stoffe bei ca. 300°C. In der anschliessenden Vergasungszone erfolgt die unvollständige Verbrennung der Feststoffe unter minimaler Luftzufuhr bei ca. 800° C. In der dritten Zone wird das brennbare Gas durch die heisse, nicht vergasbare Restmaterie hindurch abgesaugt, wodurch gewisse im Gas enthaltene Schadstoffe verbrannt werden. Durch Erhöhung des Betriebsdruckes im Drehrohr können auch manche chemischen Reaktionen gefördert werden. Asche und Schlacke werden, wie oben schon beschrieben, in der letzten Zone gesammelt und nach aussen gefördert.

Eine Variante dazu besteht darin, dass zur Veredelung des Gases bereits bei der Beschickung des Drehrohres Zusätze, z.B. Kalkgestein, zugeführt werden. In der dritten Zone wird dann ein weiterer Zusatz, nämlich überhitzter Wasserdampf von beispielsweise 400° C eingeleitet, wodurch der Schwefel gebunden wird.
Der dabei aus dem Kalkgestein entstehende Gips wird zusammen mit der Asche und der Schlacke aus der vierten Zone entnommen. Diese Materialien können nachfolgend noch verwertet werden, beispielsweise zu Isoliersteinen verpresst werden.

Der Druck im Gasgenerator lässt sich auch derart erhöhen, dass bei Grossanlagen die brennbaren Gase zur direkten Verwertung z.B. in eine Gasturbine oder in die ihr vorgeschaltete Brennkammer geleitet werden können. Dabei ermöglicht die Erfindung, weitere gut regelbare Brennstoffe und den dazu nötigen Luftbedarf miteinzumischen.

Für die Verwertung der erzeugten Gase beispielsweise in einem Dieselmotor ist es sinnvoll, nicht nur ihren Druck zu erhöhen, sondern sie auch abzukühlen, wobei die abzuführende Wärme in einem Wärmetauscher ausgenützt werden kann. Die Verbrennungsluft für den Motor wird ebenfalls, z.B. mit einem Turbolader, auf einen höheren Druck gebracht, mit dem Brenngas aus dem Gasgenerator gemischt und in den Dieselmotor befördert. Ein Leistungsverlust gegenüber einem konventionellen Brennstoff wird damit eliminiert.

Abgekühlte Gase, die auf einen höheren Druck gebracht werden oder schon mit einem erhöhten Druck aus dem Gasgenerator strömen, lassen sich auch in einer Pipeline an ortsfremde Verbraucher leiten.

Ein mit feuerfesten Steinen ausgekleidetes Drehrohr ermöglicht auch das Erreichen hoher Temperaturen im Gaserzeuger, die noch dazu in der Lage sind, auch hochgiftige Abfälle zu vernichten und die dafür notwendige oder anfallende Wärme sinnvoll auszunützen.

Das Drehrohr erhält dabei zweckmässigerweise eine grössere Länge mit mehreren Zonen unterschiedlich hoher Temperaturen und entsprechende Zufuhr von Verbrennungsluft.

Anschliessend werden Zonen mit reduzierten Temperaturen vorgesehen, wobei es sinnvoll ist, gleichzeitig diese anfallende Wärme dank dem vorherrschenden Überdruck z.B. in den unteren Druckbereich einer Gasturbine einzuleiten oder mit einem Wärmeaustauscher aus dem Drehrohr mit einem geeigneten Wärmeträger einer weiteren Verwendung zuzuleiten.

Ein Direktverbrauch des erzeugten Gases hat den Vorteil, dass seine fühlbare Wärme ausgenützt werden kann. Wird es als Stadtgas verwendet, dann erfolgt seine Einspeisung in einen Gasometer. Für den Betrieb desselben können ein oberer und ein unterer Grenzwert für seinen Druck oder seinen Inhalt festgelegt werden, bei deren Erreichung der Gasgenerator aus- bzw. eingeschaltet wird.

In einem Gasometer kann auch eine Trennung von CO-Gas und dem störenden CO₂ erfolgen.

Handelt es sich nicht um eine totale Stillegung, sondern nur um eine vorübergehende Abschaltung des Generators, wie z.B. im vorhergenannten Fall, dann wird man bestrebt sein, die Feuerung im Drehrohr nicht ausgehen zu lassen, um jederzeit wieder Gas rasch zur Verfügung zu haben. Das kann durch die dauernde Zufuhr einer dafür notwendigen minimalen Luftmenge erreicht werden. Das dabei erzeugte Gas wird sich nicht immer verwerten lassen und kann durch das Ableitungsrohr 31 weggeführt und abgefackelt werden.

## Patentansprüche

1. Gasgenerator zur kontinuierlichen Erzeugung eines brennbaren Gases durch unvollständige Verbrennung von Feststoffen unter Zuführung von Luft, im wesentlichen bestehend aus einem Drehrohr, welches an seinen beiden verjüngten Enden mit Hilfe von nichtdrehenden Abschlusselementen gegenüber der umgebenden Atmosphäre verschlossen ist, von denen das eine für die Zuführung des Gutes in das Drehrohr und das andere für die Abführung der Schlacke aus dem Drehrohr eingerichtet ist, **dadurch gekennzeichnet, dass** der Innenraum des Drehrohres (1) durch Stauringe (3,3') in mindestens drei Zonen (4,5,6) unterteilt ist, von denen, in Richtung des Durchsatzes des zu vergasenden Gutes (12) gesehen, die erste Zone (4) als Trocknungskammer, die zweite Zone (5) als Vergasungskammer und die dritte Zone (6) als Aschenkammer dient, dass die verjüngten Enden (7) des Drehrohres die Abschlusselemente (8,9) dichtend umschliessen, wobei das eine Abschlusselement (8) einen axial bewegbaren Einschubkolben (13) für das zu vergasende Gut aufweist, derart, dass der Kolben in jeder Stellung zusammen mit dem Abschlusselement einen dichtenden Abschluss des Drehrohres bildet, und das andere Abschlusselement (9) für die Durchleitung aller Endprodukte aus dem Drehrohr eingerichtet ist, und dass einzeln schaltbare Mittel (25', 31) für die Abführung des brennbaren Gases aus der Vergasungszone (5) vorgesehen sind.

2. Gasgenerator nach Anspruch 1, **dadurch gekennzeichnet, dass** eine Vorrichtung (25) für die Zuführung der Luft und eine Vorrichtung (25') für die Abführung des Gases für eine wechselweise reversible Schaltung eingerichtet sind.

3. Gasgenerator nach Anspruch 1, **dadurch gekennzeichnet, dass** zwischen den verjüngten Enden (7) des Drehrohres (1) und den Abschlusselementen (8,9) Lamellendichtungen (22) vorgesehen sind, von denen je eine Zwischenstufe für die Beaufschlagung mit unter Druck stehender Sperrluft eingerichtet ist.

4. Gasgenerator nach Anspruch 1, **gekennzeichnet durch** einen Hitzeschild (26) zwischen der zweiten Zone (5) und der dritten Zone (6).

5. Gasgenerator nach Anspruch 1, **dadurch gekennzeichnet, dass** mindestens einer der beiden Stauringe (3,3') mit Transportschaufeln (28) versehen ist, welche hinsichtlich ihres Anstellwinkels verstellbar sind.

6. Gasgenerator nach Anspruch 1, **gekennzeichnet durch** einen zusätzlichen Innenmantel (24) des Drehrohres (1).

7. Gasgenerator nach Anspruch 1, **dadurch gekennzeichnet, dass** seine Innenseite zumindest teilweise mit einem wärmebeständigen Material ausgekleidet ist.

8. Verfahren zum Betrieb des Gasgenerators nach Anspruch 1, **dadurch gekennzeichnet, dass** die Leistung des Generators durch mindestens eine betriebliche Einflussgrösse gesteuert wird, und die Mittel (25', 31) für die Abführung des brennbaren Gases wahlweise eingeschaltet werden.

9. Verfahren nach Anspruch 8, **dadurch gekennzeichnet, dass** die Menge der zugeführten Luft proportional zur abgeführten Gasmenge volumetrisch geregelt wird.

10. Verfahren nach Anspruch 8, **dadurch gekennzeichnet, dass** der Druck im Drehrohr (1) während des Betriebes auf einem höheren als dem Verbraucherdruck gehalten wird.

11. Verfahren nach Anspruch 8, **dadurch gekennzeichnet, dass** ein Teil des abgeführten Gases in Rezirkulation nochmals durch das Drehrohr (1) geleitet wird.

12. Verfahren nach Anspruch 8, **dadurch gekennzeichnet, dass** zumindest im Bereich der Vergasungszone (5) eine Wärmezufuhr von aussen vorgenommen wird.

13. Verfahren nach Anspruch 8, **dadurch gekennzeichnet, dass** zur Erzielung einer veränderbaren Zusammensetzung des brennbaren Gases mindestens ein Zusatzstoff dem zu vergasenden Gut (12) zugeführt wird, um eine entsprechende Reaktion auszulösen.

14. Verfahren nach Anspruch 13, **dadurch gekennzeichnet, dass** dem zu vergasenden Gut (12) ein Katalysator beigemengt wird.

## Claims

1. Gas generator for the continuous generation of a combustible gas by the incomplete combustion of solids, with air being supplied, essentially consisting of a rotary tube which is closed with respect to the surrounding atmosphere at its two narrowed ends with the aid of non-rotating closing-off elements, of which one is set up for supplying the material into the rotary tube and the other for discharging the slag from the rotary tube, **characterized in that** the interior of the rotary tube (1) is subdivided by retaining rings (3, 3') into at least three zones (4,5,6), of which, as seen in the direction of throughput of the material (12) to be gasified, the first zone (4) serves as a drying chamber, the second zone (5) as a gasification chamber and the third zone (6) as an ash chamber, **in that** the narrowed ends (7) of the rotary tube sealingly surround the closing-off elements (8, 9), one closing-off element (8) having an axially moveable push-in piston (13) for the material to be gasified, in such a way that, in each position, the piston forms, together with the closing-off element, a sealing closure of the rotary tube, and the other closing-off element (9) being set up for passing all the final products out of the rotary tube, and **in that** individually switchable means (25', 31) are provided for discharging the combustible gas out of the gasification zone (5).

2. Gas generator according to Claim 1, **characterized in that** a device (25) for supplying the air and a device (25') for discharging the gas are set up for alternately reversible switching.

3. Gas generator according to Claim 1, **characterized in that** between the narrowed ends (7) of the rotary tube (1) and the closing-off elements (8,9) are provided lamellar seals (22), an intermediate stage of which is set up in each case for being acted upon by barrier air which is under pressure.

4. Gas generator according to Claim 1, **characterized by** a heat shield (26) between the second zone (5) and the third zone (6).

5. Gas generator according to Claim 1, **characterized in that** at least one of the two retaining rings (3, 3') is provided with transport blades (28) which have an adjustable angle of incidence.

6. Gas generator according to Claim 1, **characterized by** an additional inner casing (24) of the rotary tube (1).

7. Gas generator according to Claim 1, **characterized in that** its inner face is lined at least partially with a heat-resistant material.

8. Method for operating the gas generator according to Claim 1, **characterized in that** the power output of the generator is controlled by at least one operational influencing variable, and the means (25', 31) for discharging the combustible gas are switched on selectively.

9. Method according to Claim 8, **characterized in that** the quantity of air supplied is regulated proportionally in volume to the discharged gas quantity.

10. Method according to Claim 8, **characterized in that** the pressure in the rotary tube (1) during operation is maintained at a pressure higher than the consumer pressure.

11. Method according to Claim 8, **characterized in that** part of the discharged gas is conducted through the rotary tube (1) again in recirculation.

12. Method according to Claim 8, **characterized in that** a supply of heat from outside is carried out at least in the region of the gasification zone (5).

13. Method according to Claim 8, **characterized in that**, to achieve a variable composition of the combustible gas, at least one additive is supplied to the material (12) to be gasified, in order to trigger a corresponding reaction.

14. Method according to Claim 13, **characterized in that** a catalyst is admixed to the material (12) to be gasified.

## Revendications

1. Générateur de gaz pour la production continue d'un gaz combustible par combustion incomplète de solides par apport d'air, se composant essentiellement d'un tube rotatif, qui est fermé, par rapport à l'atmosphère environnante, à ses deux extrémités rétrécies, à l'aide d'éléments de terminaison non rotatifs, dont l'un est prévu pour l'apport du produit dans le tube rotatif et l'autre pour l'évacuation de la scorie hors du tube rotatif, **caractérisé en ce que** l'espace intérieur du tube rotatif (1) est divisé par des bagues de retenue (3, 3') en au moins trois zones (4, 5, 6), dont la première zone (4), vue dans le sens du passage du produit à gazéifier (12), servant de chambre de séchage, la deuxième zone (5) de chambre de gazéification et la troisième zone (6) de chambre de cendres, **en ce que** les extrémités rétrécies (7) du tube rotatif entourent de manière étanche les éléments de terminaison (8, 9), un élément de terminaison (8) présentant un piston de poussée mobile axialement (13) pour le produit à gazéifier, de telle sorte que le piston forme, dans chaque position, conjointement avec l'élément de terminaison, une terminaison étanche du tube rotatif, et l'autre élément de terminaison (9) étant prévu pour le guidage de tous les produits finaux hors du tube rotatif, et **en ce que** des moyens commutables individuellement (25', 31) sont prévus pour l'évacuation du gaz combustible hors de la zone de gazéification (5).

2. Générateur de gaz selon la revendication 1, **caractérisé en ce qu'**un dispositif (25) pour l'alimentation en air et un dispositif (25') pour l'évacuation du gaz sont prévus pour pouvoir commuter de manière alternée réversible.

3. Générateur de gaz selon la revendication 1, **caractérisé en ce qu'**entre les extrémités rétrécies (7) du tube rotatif (1) et les éléments de terminaison (8, 9) sont prévus des joints d'étanchéité à lamelles (22) dont à chaque fois un étage intermédiaire est prévu pour la sollicitation avec de l'air de barrage sous pression.

4. Générateur de gaz selon la revendication 1, **caractérisé par** un écran thermique (26) entre la deuxième zone (5) et la troisième zone (6).

5. Générateur de gaz selon la revendication 1, **caractérisé en ce qu'**au moins l'une des deux bagues de retenue (3, 3') est pourvue d'aubes de transport (28) qui sont ajustables par rapport à leur angle de positionnement.

6. Générateur de gaz selon la revendication 1, **caractérisé par** une enveloppe intérieure supplémentaire (24) du tube rotatif (1).

7. Générateur de gaz selon la revendication 1, **caractérisé en ce que** son côté intérieur est garni au moins partiellement avec un matériel résistant à la chaleur.

8. Procédé de fonctionnement du générateur de gaz selon la revendication 1, **caractérisé en ce que** la puissance du générateur est commandée par au moins une valeur influençant le fonctionnement, et les moyens (25', 31) pour l'évacutation du gaz combustible sont enclenchés de manière sélective.

9. Procédé selon la revendication 8, **caractérisé en ce que** la quantité de l'air apporté est réglée en volume de manière proportionnelle à la quantité de gaz évacué.

10. Procédé selon la revendication 8, **caractérisé en ce que** la pression dans le tube rotatif (1) pendant le fonctionnement est maintenue à une pression supérieure à la pression de consommation.

11. Procédé selon la revendication 8, **caractérisé en ce qu'**une partie du gaz évacué est reconduite dans la recirculation à travers le tube rotatif (1).

12. Procédé selon la revendication 8, **caractérisé en ce qu'**un apport de chaleur est réalisé depuis l'extérieur au moins dans la région de la zone de gazéification (5).

13. Procédé selon la revendication 8, **caractérisé en ce que** pour l'obtention d'une composition variable du gaz combustible, on apporte au moins un additif au produit à gazéifier (12), afin de déclencher une réaction correspondante.

14. Procédé selon la revendication 13, **caractérisé en ce que** l'on mélange un catalyseur au produit à gazéifier (12).
